# EUROPÄISCHE PATENTSCHRIFT

(11) **EP 1 969 945 B1**
(45) Veröffentlichungstag und Bekanntmachung des Hinweises auf die Patenterteilung: **10.10.2012**
(21) Anmeldenummer: 08004293.0
(22) Anmeldetag: 07.03.2008
(51) Int. Cl.: A22C 11/12, B65B 51/04

(54) **Verfahren und Vorrichtung zum gesteuerten Verschliessen wenigstens eines Clips um einen füllgutfreien Zopfabschnitt zwischen zwei mit einer Hülle umschlossenen Füllgutabschnitten**
Method and device for controlled closing of at least one clip around a braided section devoid of filling material between two filling material sections in a wrapper
Procédé et dispositif de fermeture commandée d'au moins un clip autour d'une section tressée exempte de produit de remplissage entre deux sections tressées fermées par un emballage

(30) Priorität: 16.03.2007 DE 102007012777
(43) Veröffentlichungstag der Anmeldung: 17.09.2008
(73) Patentinhaber: Poly-clip System GmbH & Co. KG, 65795 Hattersheim (DE)
(72) Erfinder: Düringer, Carsten, 61381 Friedrichsdorf (DE)
(74) Vertreter: Eisenführ, Speiser & Partner

(56) Entgegenhaltungen:
- DE-A1- 1 939 673
- FR-A- 2 213 200
- US-A- 2 709 255
- US-A- 2 929 069
- US-A- 3 224 083

## Beschreibung

Die Erfindung betrifft ein Verfahren und eine Vorrichtung zum gesteuerten Verschließen wenigstens eines Clips um einen füllgutfreien Zopfabschnitt einer Hülle zwischen zwei mit der Hülle umschlossenen Füllgutabschnitten, bei dem der wenigstens eine Clip den Zopfabschnitt umfassend mittels zweier gesteuert bewegter Schließwerkzeuge um einen Zopfabschnitt geschlossen wird.

Eine derartige Vorrichtung ist beispielsweise aus DE 195 19 591 C2 bekannt. Dabei wird ein U-förmiger Clip mittels zweier zueinander ausgerichteter Schließwerkzeuge mit dem füllgutfreien Zopfabschnitt in Berührung gebracht und die Schenkel des Clips werden bei der Schließbewegung, bei welcher ein Werkzeug auf das andere zubewegt wird, um den füllgutfreien Zopfabschnitt herumgebogen.

Aus EP 1 095 570 A1 ist eine Doppelclipvorrichtung bekannt, bei welcher zwei Clips um den füllgutfreien Zopfabschnitt geschlossen werden.

Aufgabe der Erfindung ist es, ein Verfahren und eine Vorrichtung der eingangs genannten Art zu schaffen, mit denen mittels einer einfachen Bewegungssteuerung das Schließen des jeweiligen Clips um den Zopfabschnitt mit geringem Zeitaufwand erreicht wird.

Diese Aufgabe wird beim Verfahren erfindungsgemäß durch die Merkmale des Patentanspruches 1 und bei der Vorrichtung durch die Merkmale des Patentanspruches 14 erreicht.

Bei der Erfindung wird eines der beiden Schließwerkzeuge von einer Seite des Zopfabschnitts her quer zur Längsausdehnung des Zopfabschnittes am Zopfabschnitt vorbei auf die andere Seite des Zopfabschnittes geführt. Anschließend werden die beiden Schließwerkzeuge in eine zueinander ausgerichtete Position gebracht und dann wird der Schließvorgang des Clips um den Zopfabschnitt durchgeführt.

Dabei kann das am Zopfabschnitt vorbeibewegte Schließwerkzeug gegenüber dem anderen ortsfest gehaltenen Schließwerkzeug in die zueinander ausgerichtete Position bewegt werden. Vorzugsweise wird hierzu das am Zopfabschnitt vorbeibewegte Schließwerkzeug durch eine Drehbewegung in die zum anderen Schließwerkzeug ausgerichtete Position für den Schließvorgang gebracht. Dabei befinden sich die beiden Schließwerkzeuge zu beiden Seiten des dazwischenliegenden Zopfabschnittes.

Die Drehbewegung kann dabei bei einer Ausführungsform um eine zur Längsausdehnung des Zopfabschnittes senkrechte Drehachse erfolgen. Bei einem weiteren Ausführungsbeispiel erfolgt die Drehbewegung um eine zur Längsausdehnung des Zopfabschnittes parallele Drehachse. Bei der Schließbewegung zum Schließen des Clips erfolgt eine Bewegung der beiden Schließwerkzeuge aufeinander zu, wobei diese Schließbewegung vorzugsweise im wesentlichen senkrecht zur Längsausdehnung des Zopfabschnittes erfolgt. Vorzugsweise wird dabei eines der beiden Schließwerkzeuge, insbesondere das am Zopfabschnitt vorher vorbeibewegte Schließwerkzeug in ruhender Position gehalten und das andere Schließwerkzeug, welches den Clip über den Zopfabschnitt schiebt, bewegt. Selbstverständlich besteht auch die Möglichkeit, dass das am Zopfabschnitt vorbeibewegte Schließwerkzeug bewegt wird, wogegen das andere Schließwerkzeug in ruhender Position gehalten wird.

Der Clip wird vor der Schließbewegung zwischen die beiden Schließwerkzeuge gebracht, wobei der Clip vorzugsweise vor dem bei der Schließbewegung bewegten Schließwerkzeug angeordnet wird. Die Anordnung des Clips zwischen den beiden Schließwerkzeugen erfolgt vorzugsweise in einer zur Richtung der Schließbewegung senkrechten Laderichtung.

Bevor der jeweilige Clip einzeln zwischen die beiden Schließwerkzeuge gebracht wird, können mehrere Clips, in einer Reihe angeordnet, etwa parallel zur Richtung der Schließbewegung geführt werden. Durch die dazu senkrechte Ladebewegung lassen sich in einfacher Weise aufeinander folgende Clips jeweils einzeln in die für die Schließbewegung geeignete Position zwischen die Schließwerkzeuge bringen.

Beim Bewegen des einen Schließwerkzeugs vorbei am Zopfabschnitt werden die beiden Schließwerkzeuge in einem bestimmten Abstand zueinander in Richtung der gemeinsamen Bewegung geführt. Durch diesen Abstand ist gewährleistet, dass der Clip zwischen den beiden Werkzeugen angeordnet werden kann und der Zopfabschnitt zwischen die beiden Schließwerkzeugen zu liegen kommt. In bevorzugter Weise wird vor der gemeinsamen Bewegungsführung der beiden Schließwerkzeuge der wenigstens eine Clip vor dem beim Schließvorgang bewegten Schließwerkzeug angeordnet. Diese Anordnung des Clips kann vorzugsweise während der Herstellung des Zopfabschnittes, bei dem durch eine Verdrängereinrichtung die Verpackungshülle zwischen zwei Füllgutabschnitten eingeschnürt wird, erfolgen. Auch können die beiden Schließwerkzeuge synchron mit dem Produktstrom und parallel zum Produktstrom, dessen Richtung im wesentlichen senkrecht zur Richtung der Schließbewegung bzw. in Richtung der Längsausdehnung des Zopfabschnittes ist, noch zusätzlich bewegt werden.

Vorzugsweise werden zwei Clips vorzugsweise gleichzeitig um den Zopfabschnitt geschlossen. Die zu schließenden Clips werden zwischen den zwei nicht näher dargestellten Verdrängereinrichtungen, welche durch Einschnürung der Verpackungshülse zur Herstellung des füllgutfreien Zopfabschnittes dienen, für die Schließbewegung angeordnet.

Die Vorrichtung zum gesteuerten Verschließen des wenigstens einen Clips beinhaltet für die beiden Schließwerkzeuge eine gemeinsame als Clipwerkzeug ausgebildete Führungseinrichtung, mit welcher die Schließwerkzeuge quer zur Längsausdehnung des Zopfabschnittes geführt werden. Dabei wird eines der beiden Schließwerkzeuge am Zopfabschnitt vorbeigeführt, so dass die Schließwerkzeuge zu beiden Seiten des Zopfabschnittes angeordnet sind. Durch die Führungseinrichtung wird ferner gewährleistet, dass das am Zopfabschnitt vorbeigeführte Werkzeug mit dem anderen Schließwerkzeug für die Durchführung der Schließbewegung ausgerichtet wird. Diese Bewegung in die ausgerichtete Position ist vorzugsweise eine Drehbewegung, wobei, wie oben schon erläutert, die Drehbewegung um eine zum Zopfabschnitt senkrechte Drehachse oder um eine zum Zopfabschnitt parallele Drehachse erfolgen kann.

Die Führungseinrichtung bzw. das Clipwerkzeug kann in bevorzugter Weise auch in Richtung des Produktstromes zumindest während der Schließbewegung, bei welcher der jeweilige Clip um den Zopfabschnitt geschlossen wird, mitbewegt werden.

Die Führungseinrichtung kann in einfacher Weise ausgebildet sein und beispielsweise Stabform, insbesondere eine zylindrische, insbesondere kreiszylindrische Stabform aufweisen. Dabei kann nur der für den Schließvorgang erforderliche Teil der Führungseinrichtung vor einer Trennwand angeordnet und bewegt werden. Die übrigen Teile befinden sich hinter der Trennwand. Vorzugsweise kommt die Erfindung zum Befüllen der Hülle mit Nahrungsmitteln, insbesondere bei der Wurstherstellung zum Einsatz.

Die stabförmige Ausgestaltung der Führungseinrichtung bzw. des Clipwerkzeuges gewährleistet ein geringes Gewicht mit kompakten Abmessungen. Dieses insbesondere zylindrisch ausgebildete Clipwerkzeug kann somit rasch bewegt werden. Auch lässt sich das in einem stabförmigen Gehäuse untergebrachte Clipwerkzeug leicht reinigen. Auch sind eine einfache Clipüberwachung, insbesondere Erfolgskontrolle und entsprechende Reaktionen möglich. Jede Bewegung, insbesondere die Schließbewegung kann an das jeweils zu behandelnde Produkt angepasst werden. Die aufzuwendenden Kräfte und die bei der Bewegung zurückzulegenden Wege beim Verschließen des jeweiligen Clips lassen sich einfach steuern. Die Gesamtanordnung der Vorrichtung ist gegenüber Toleranzen beim Material und in der Herstellung unempfindlich.

Des weiteren ist es bei der vorliegenden Erfindung besonders vorteilhaft, dass das Durchtrennen des Zopfabschnittes nach dem Schließen des wenigstens einen Clips mittels eines Trennmessers geschieht, welches durch einen Elektromotor, vorzugsweise einem Linearmotor angetrieben wird. Hierdurch wird das Vorsehen etwaiger Druckluftanlagen, wie es im Stand der Technik der Fall ist, vermieden.

Um mit der erfindungsgemäßen Vorrichtung bzw. der erfindungsgemäßen Clipzange unterschiedlich große Clips verarbeiten zu können, ist es weiterhin von Vorteil, wenn der Zangenkopf austauschbar ist. Insbesondere kann der Abschnitt des erfindungsgemäßen Clipwerkzeuges bzw. der erfindungsgemäßen Clipzange, der die wenigstens eine Matrize sowie den mindestens einen Stempel enthält, austauschbar ausgestaltet sein. Die verschiedenen Zangenköpfe unterscheiden sich dabei in den den verschiedenen Clipgrößen angepassten Stempeln und/oder Matrizen. Ebenso ist es möglich, dass Teile der Clipladeeinrichtung, insbesondere die Clipschublade austauschbar ist. Des weiteren ist es aber auch möglich, dass diese Teile so gestaltet sind, dass mit ihnen die Verarbeitung mehrerer unterschiedlich großer Clips möglich ist.

Es ist weiterhin vorgesehen, dass die Drehbewegung um eine zur Längsausdehnung des Zopfabschnittes senkrechte oder parallele Drehachse ausgeführt wird.

Vorteilhaft ist, dass bei der Schließbewegung zum Schließen des Clips die beiden Schließwerkzeuge aufeinander zu bewegt werden.

Von weiterem Vorteil ist, dass beim Schließvorgang das am Zopfabschnitt vorbeibewegte Schließwerkzeug ortsfest gehalten wird und das andere Schließwerkzeug auf das ortsfest gehaltene Schließwerkzeug zubewegt wird.

Vorteilig ist, wenn beim Bewegen des einen Schließwerkzeugs vorbei am Zopfabschnitt beide Schließwerkzeuge gemeinsam mit einem Abstand zueinander in der gemeinsamen Bewegungsrichtung geführt werden.

Zu erwähnen ist, dass vor der gemeinsamen Bewegungsführung der beiden Schließwerkzeuge der wenigstens eine Clip vor dem beim Schließvorgang bewegten Schließwerkzeug angeordnet wird.

Weiterhin zu nennen ist, dass das Anordnen des Clips zwischen den Schließwerkzeugen während der Herstellung des Zopfabschnitts erfolgt.

Des weiteren ist zu erwähnen, dass zwei Clips um den Zopfabschnitt geschlossen werden.

Vorteilig ist, dass das am Zopfabschnitt vorbeigeführte Schließwerkzeug durch eine Drehbewegung in die mit dem anderen Schließwerkzeug ausgerichtete Position bewegbar ist.

Außerdem ist es von Vorteil, dass die Drehbewegung um eine zur Längsausdehnung des Zopfabschnittes senkrechte Drehachse oder um eine zum Zopfabschnitt parallele Drehachse erfolgt.

Zu erwähnen ist, dass die Clips in einer Clipzuführeinrichtung eine Clipvereinzelungseinrichtung in der Clipladeeinrichtung zugeführt sind.

Zusätzlich ist es von Vorteil, dass mehrere Clips in der Clipzuführeinrichtung in einer Reihe geführt sind und einzeln aus der Clipzuführeinrichtung in eine senkrecht dazu bewegte Cliphubeinrichtung bewegt sind.

Des weiteren ist zu nennen, dass die Bewegungsrichtungen der Clips in der Clipzuführeinrichtung und der Cliphubeinrichtung etwa senkrecht zueinander verlaufen.

Vorteilhaft ist, wenn die Bewegungsrichtung des jeweiligen Clips in der Cliphubeinrichtung etwa senkrecht zur Schließbewegung des Schließwerkzeugs ist.

Außerdem ist zu erwähnen, dass in der Führungseinrichtung ferner ein Trennmesser zum Trennen des Zopfabschnittes nach dem Schließen des wenigstens einen Clips geführt ist.

Es ist vorgesehen, dass die Bewegungsrichtung des Trennmessers parallel zur Schließbewegung des einen Schließwerkzeugs verläuft.

Vorgesehen ist weiterhin, dass die Führungseinrichtung stabförmig ausgebildet ist und dass am Zopfabschnitt vorbeiführbare Schließwerkzeug am vorderen Stabende der Führungseinrichtung angeordnet ist.

Des weiteren ist es vorteilhaft, dass die Führungseinrichtung von einem Clipwerkzeug gebildet ist, welches am vorderen Ende einen um die senkrecht zum Zopfabschnitt verlaufende Drehachse drehbaren Führungsteil aufweist, an welchem das wenigstens eine am Zopfabschnitt vorbeiführbare Schließwerkzeug befestigt ist.

Zu nennen ist außerdem, dass das wenigstens eine Schließwerkzeug in einem Werkzeugbacken am drehbaren Führungsteil gehalten ist, wobei zwischen dem Werkzeugbacken und dem übrigen Teil des drehbaren Führungsteiles ein die Drehung und die Drehachse ermöglichender Schlitz, welcher sich um die Drehachse erstreckt, vorgesehen ist.

Vorgesehen ist, dass die Drehbewegung um die zum Zopfabschnitt senkrechte Drehachse innerhalb eines Winkelbereichs von etwa 90° erfolgt.

Vorgesehen ist auch, dass das drehbare Führungsteil eine im wesentlichen hohlzylindrische Form, deren Außenabmessung an die Gehäuseform des Clipwerkzeugs angepasst ist, aufweist.

Anhand der Figuren wird an Ausführungsbeispielen die Erfindung noch näher erläutert.

### Es zeigt

- Fig. 1: ein erstes Ausführungsbeispiel in einer ersten Betriebsstellung;
- Fig. 2: das erste Ausführungsbeispiel in einer zweiten Betriebsstellung;
- Fig. 3: das erste Ausführungsbeispiel in einer dritten Betriebsstellung;
- Fig. 4: eine schnittbildliche Darstellung des ersten Ausführungsbeispiels in der dritten Betriebsstellung;
- Fig. 5: das erste Ausführungsbeispiel in einer vierten Betriebsstellung;
- Fig. 6: das erste Ausführungsbeispiel in Zusammenwirkung mit einer Clipladestation in einer ersten Zuführbetriebsstellung;
- Fig. 7: das in Fig. 6 dargestellte Ausführungsbeispiel in einer zweiten Clipzuführungsstellung;
- Fig. 8: in perspektivischer Seitenansicht ein zweites Ausführungsbeispiel;
- Fig. 9: ein drittes Ausführungsbeispiel; und
- Fig. 10: ein viertes Ausführungsbeispiel.

Die in den Figuren dargestellten Ausführungsbeispiele zeigen Vorrichtungen bzw. Clipwerkzeuge 6 zum Verschließen wenigstens eines Clips 10 um einen füllgutfreien Zopfabschnitt 1, einer Hülle zwischen zwei mit der Hülle umschlossenen Füllgutabschnitten 2, 3. Bei dem Füllgut kann es sich um Nahrungsmittel, insbesondere Wurstwaren handeln.

Die dargestellten Clipwerkzeuge 6 beinhalten Schließwerkzeuge 4, 5, mit denen beim Schließvorgang der jeweilige Clip 10 um den Zopfabschnitt 1 angeordnet und geschlossen wird. Die Schließwerkzeuge 4, 5 können als Stempel (Schließwerkzeug 4) und als Matrize (Schließwerkzeuge 5) ausgebildet sein.

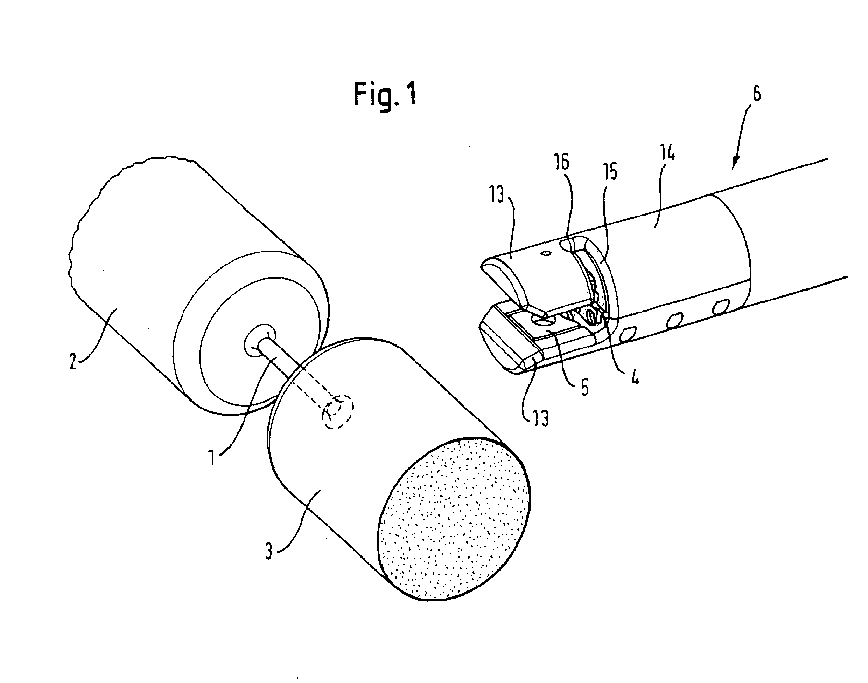

Die beiden Schließwerkzeuge 4, 5 sind in einer gemeinsamen vom Clipwerkzeug 6 gebildeten Führungseinrichtung angeordnet, welche ein Gehäuse, beispielsweise kreiszylindrisches Gehäuse beim Ausführungsbeispiel der Fig. 1 bis 7 aufweist. Die in den Figuren dargestellten Ausführungsbeispiele der Clipwerkzeuge 6 besitzen eine längliche, insbesondere Stabform.

Zum Verschließen eines jeweiligen Clips 10 um den Zopfabschnitt 1 wird folgender Verfahrensablauf durchgeführt.

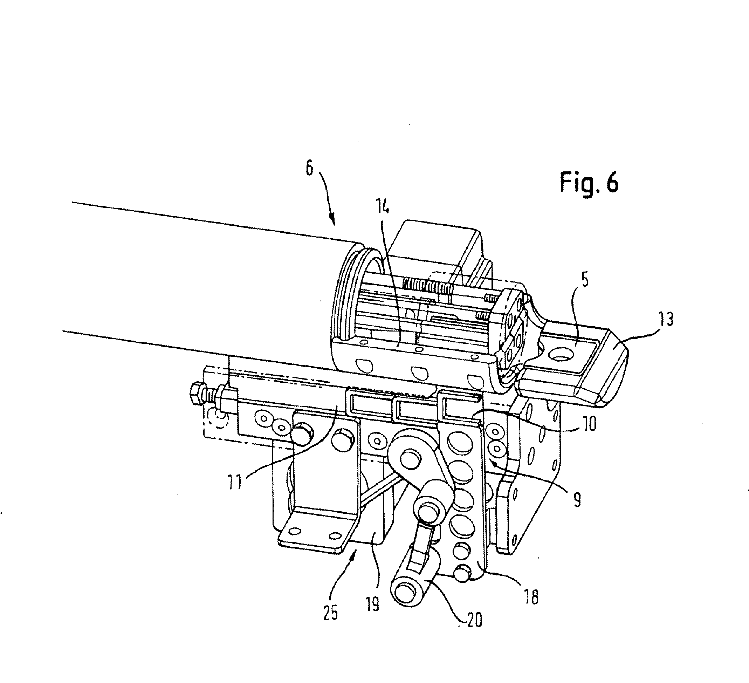

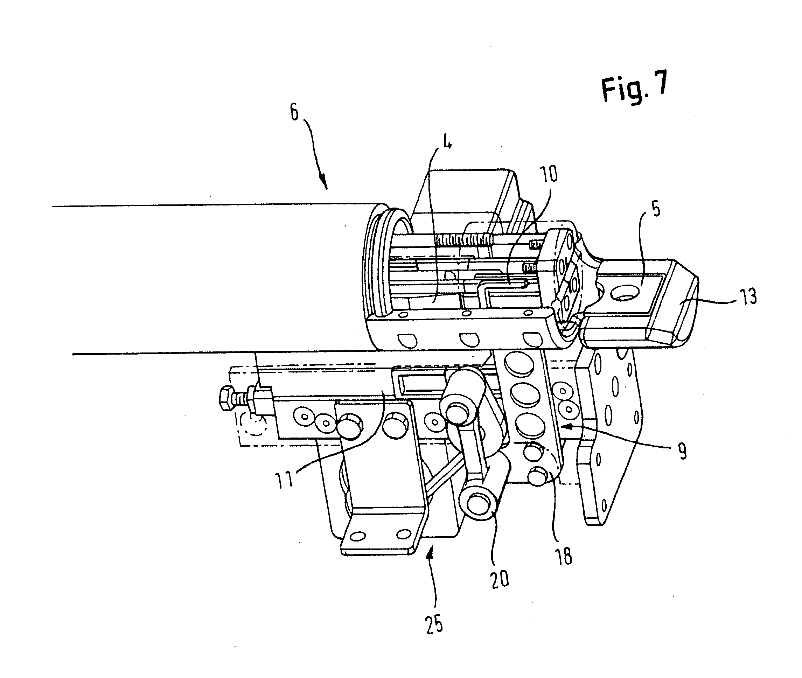

Nicht näher dargestellte Verdrängereinrichtungen, welche synchron mit dem von den Füllgutabschnitten 2, 3 gebildeten Produktstrom mitlaufen, erzeugen durch Verdrängen und Spreizen den weitgehend füllgutfreien Zopfabschnitt 1 in bekannter Weise. Diese beiden Verdrängereinrichtungen befinden sich an den beiden Enden des Zopfabschnittes 1. Während des Füllens der Hülle und der Herstellung des Zopfabschnittes 1 mittels der Verdrängereinrichtungen wird das Clipwerkzeug 6 mit einem Clip oder zwei Clips 10 beladen, wie im einzelnen anhand der Fig. 6 und 7 noch erläutert wird.

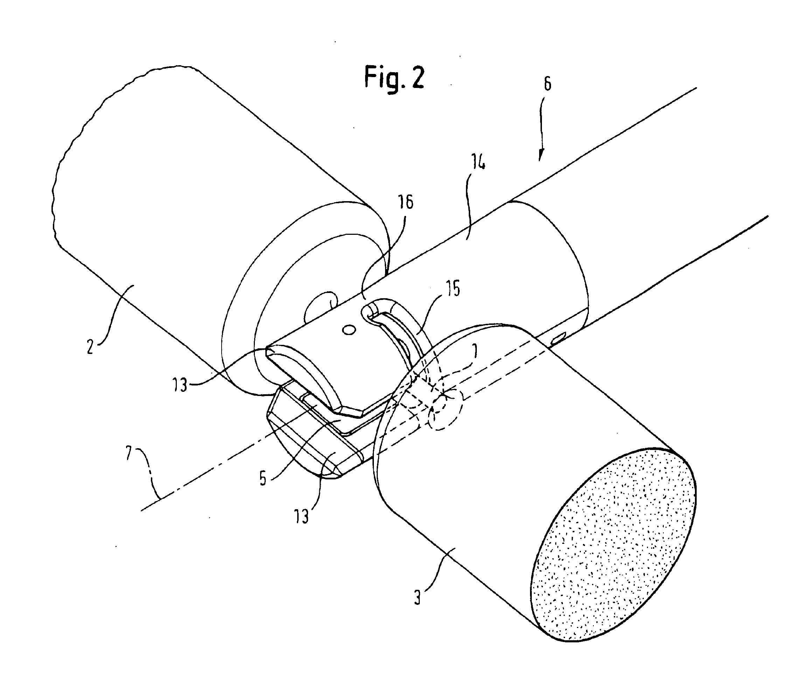

Zu Beginn des Schließvorganges wird das mit den Clips 10 beladene Clipwerkzeug 6, welches auch die gemeinsame Führungseinrichtung für die Schließwerkzeuge 4, 5 bildet, aus einer in Fig. 1 dargestellten zurückgezogenen Ausgangsposition im wesentlichen senkrecht zur Ausdehnung des Zopfabschnittes 1 bewegt, bis das Schließwerkzeug 5 bzw. die beiden Schließwerkzeuge 5 am Zopfabschnitt 1 vorbei auf die andere Zopfabschnittseite bewegt sind. Bei den dargestellten Ausführungsbeispielen sind die am Zopfabschnitt vorbeigeführten Schließwerkzeuge 5 in Werkzeugbacken 13 gehalten. Diese Werkzeugbacken 13 werden, wie aus Fig. 2 zu ersehen ist, zusammen mit den Schließwerkzeugen 5 ausgehend von der Position in Fig. 1 auf die andere Seite des Zopfabschnittes 1 bewegt. Die Schließwerkzeuge 4 verbleiben an der Ausgangsseite. Somit liegen die für den Schließvorgang jeweils benötigten Schließwerkzeuge 4 und 5 zu beiden Seiten des Zopfabschnittes 1.

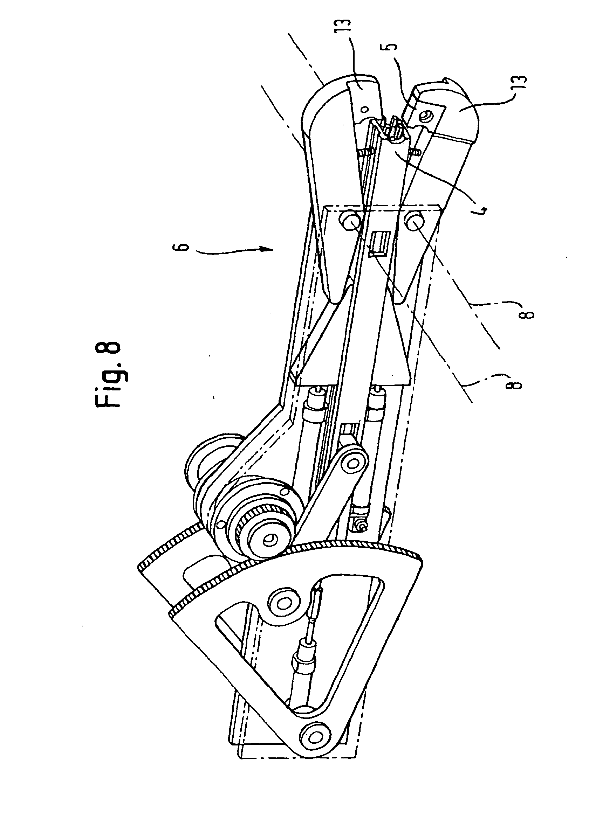

Um die Schließwerkzeuge 4 und 5 in eine jeweils zueinander ausgerichtete Position für den anschließenden Schließvorgang zu bringen, werden beim Ausführungsbeispiel der Fig. 1 bis 7 die Schließwerkzeuge 5 um eine zum Zopfabschnitt 1 senkrechte Drehachse 7 und bei den Ausführungsformen der Fig. 8 bis 10 um eine zum Zopfabschnitt 1, welcher in diesen Figuren nicht dargestellt ist, parallele Drehachse 8 jeweils gedreht bzw. geschwenkt.

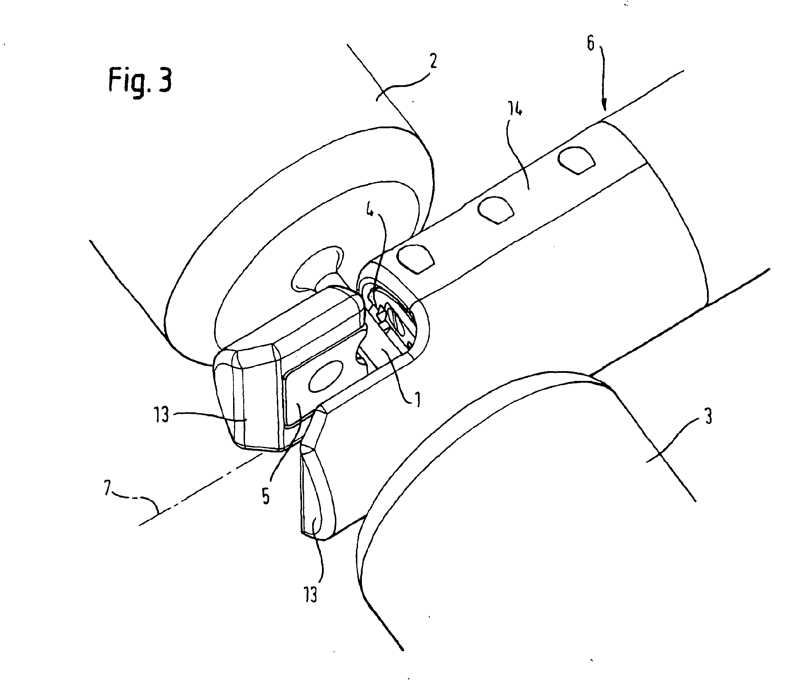

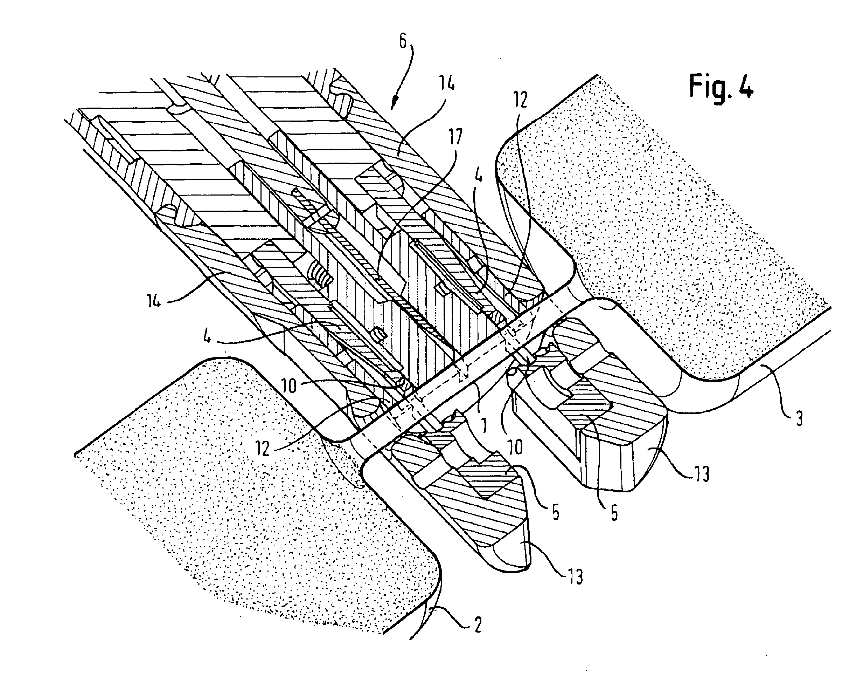

Beim Ausführungsbeispiel der Fig. 1 bis 7 nehmen nach der Schwenkbewegung um die Drehachse 7 die Schließwerkzeuge 5 an den beiden Werkzeugbacken 13 die in den Fig. 3 und 4 dargestellte Position ein. Die das Clipwerkzeug 6 bildende Führungseinrichtung besitzt hierzu am vorderen Ende einen drehbaren Führungsteil 14, an welchem die Werkzeugbacken 13 befestigt sind. Dieses drehbare Führungsteil 14 ist an die zylindrische Form des übrigen Gehäuses angepasst und ist im wesentlichen hohlzylindrisch ausgebildet. Beim Vorbeischieben der in den Werkzeugbacken gehaltenen Schließwerkzeuge 5 (Fig. 2) liegen diese oberhalb und unterhalb einer Ebene, in welcher sich der Zopfabschnitt 1 befindet. Die Werkzeugbacken 13 sowie die darin gehaltenen Schließwerkzeuge 5 besitzen einen Abstand voneinander, welcher das ungehinderte Vorbeischieben der Schließwerkzeuge 5 am Zopfabschnitt 1 bei der Bewegung aus der in Fig. 1 dargestellten Position in die in Fig. 2 dargestellte Position ermöglicht. Um das Drehen der Schließwerkzeuge 5 aus der in Fig. 2 dargestellten Position in die in den Fig. 3 und 4 dargestellte Position um die Drehachse 7 zu ermöglichen, sind zwischen den Werkzeugbacken 13 und den darin gehaltenen Schließwerkzeugen 5 und dem übrigen Teil des drehbaren Führungsteiles 14 sich etwa über einen Winkelbereich von 90° erstreckende Schlitze 15 vorgesehen. Die Schlitzbreite ist so bemessen, dass die Schlitzränder bei der Drehung ungehindert am Zopfabschnitt 1 vorbeigeführt werden können. Hierdurch wird eine Drehung aus der in Fig. 2 dargestellten Position in die in den Fig. 3 und 4 dargestellte Position der Schließwerkzeuge ermöglicht. Diese Drehung erfolgt über einen Winkel von etwa 90°.

Über verbleibende Verbindungsstege sind die Werkzeugbacken 13 beim dargestellten Ausführungsbeispiel einstückig mit dem restlichen Teil des drehbaren Führungsteils 14 verbunden. Der drehbare Führungsteil kann zur Anpassung an das Gehäuse der gemeinsamen Führungseinrichtung 6 bzw. des Clipwerkzeugs hohlzylindrisch ausgebildet sein.

Wie insbesondere aus Fig. 4 zu ersehen ist, sind die Schließwerkzeuge 4 und 5 für den sich anschließenden Schließvorgang zueinander ausgerichtet, wobei zwischen den Schließwerkzeugen der Zopfabschnitt 1 und die mit ihren Schenkeln über den Zopfabschnitt 1 geschobenen Clips 10 angeordnet sind.

Zur einwandfreien Lagepositionierung, insbesondere mittig zu den Schließwerkzeugen 4 und 5 kann eine Fixiereinrichtung 12, welche beispielsweise hülsenförmig ausgebildet ist, im Clipwerkzeug 6 vorgesehen sein.

Zum Schließen der beiden Clips 10 werden die Schließwerkzeuge 4, welche als Stempel ausgebildet sein können, in Richtung auf die Schließwerkzeuge 5, welche als Matrizen ausgebildet sein können, zubewegt. Dabei werden die Clips 10 nach vorne gegen die Schließwerkzeuge 5 geschoben und durch die Matrizenflächen an den Schließwerkzeugen 5 werden die über den Zopfabschnitt 1 geschobenen Schenkel der Clips 10 um den Zopfabschnitt 1 geschlungen und geschlossen. Dieser Schließvorgang kann weggesteuert und/oder kraftgesteuert und mit Überwachung der Verschlusskraft und/oder der Cliphöhe durchgeführt werden.

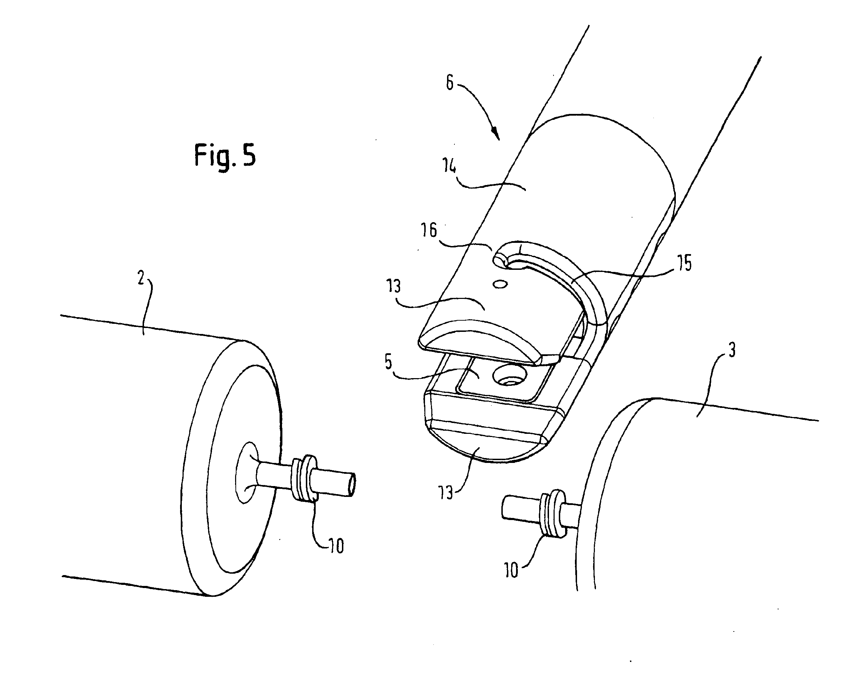

Nach diesem Schließvorgang bewegen sich die Schließwerkzeuge 4 in ihre Ausgangsposition zurück und geben die getrennten Zopfabschnitte frei. Der drehbare Führungsteil 14 wird zusammen mit den Schließwerkzeugen 5 in die in Fig. 2 gezeigte Position zurückgedreht. Die Führungseinrichtung bzw. das Clipwerkzeug 6 wird dann aus dieser Position in die in Fig. 5 dargestellte Ausgangsposition, welche der in Fig. 1 dargestellten Position entspricht, zurückbewegt. Falls keine Trennung des füllgutfreien Zopfabschnittes 1 stattgefunden hat, können die Schließwerkzeuge 5 aufgrund des Abstandes unbehindert an dem Zopfabschnitt 1 vorbeigeführt werden. Falls, wie oben beschrieben, mit dem Trennmesser 17 der Zopfabschnitt 1 in zwei Abschnitte getrennt wird, ergibt sich die in Fig. 5 dargestellte Betriebssituation. In dieser Positionierung des Clipwerkzeugs 6 erfolgt das erneute Beladen mit den Clips 10. Dieser Vorgang wird anhand der Figuren 6 und 7 erläutert.

Zum Beladen des Clipwerkzeugs 6 dient eine Clipladeeinrichtung 25, welche unterhalb des Clipwerkzeugs 6 in der Ausgangsposition angeordnet ist. In einer Clipzuführeinrichtung 11 werden die Clips in Reihe parallel zur Längsausdehnung des Clipwerkzeuges 6 in eine Vereinzelungsstation gebracht, welche beim Ausführungsbeispiel als Cliphubeinrichtung 9 ausgebildet ist. Die Cliphubeinrichtung 9 beinhaltet ein Hubelement 18, welches von einer Antriebseinrichtung 19 über einen Kurbeltrieb 20 angetrieben wird. Vom Hubelement wird der in der Clipreihe vorne liegende Clip erfasst und in eine Position bewegt, welche vor dem Schließwerkzeug 4 liegt (Fig. 7). Die Förderbewegung bzw. Hubbewegung des Hubelementes 18 ist senkrecht zur Förderrichtung der in Reihe des Hubelementes 18 zugeführten Clips in der Clipzuführeinrichtung 11. Aus obiger Erläuterung ergibt sich, dass zur Beladung des Clipwerkzeugs 6 die Clips jeweils einzeln zugeführt werden. Hierzu werden mehrere Clips 10 in Reihe in einer bestimmten Richtung, insbesondere parallel zur Längsausdehnung des Clipwerkzeugs 6 zugeführt und in eine zweite Bewegungsrichtung senkrecht dazu zum Beladen des Clipwerkzeuges 6 mit den einzelnen Clips übergeführt. Beim Wechsel der Bewegungsrichtung erfolgt die Vereinzelung der Clips.

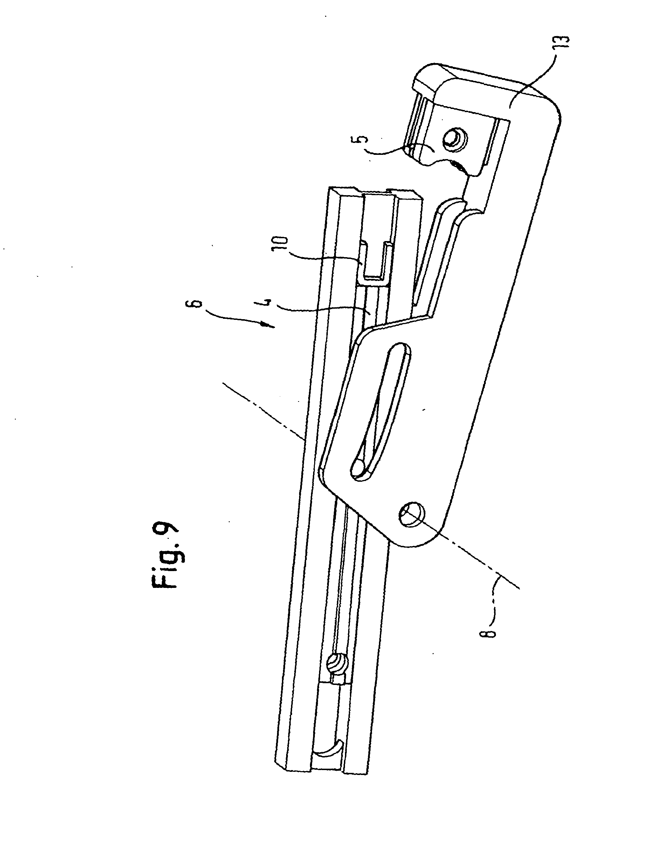

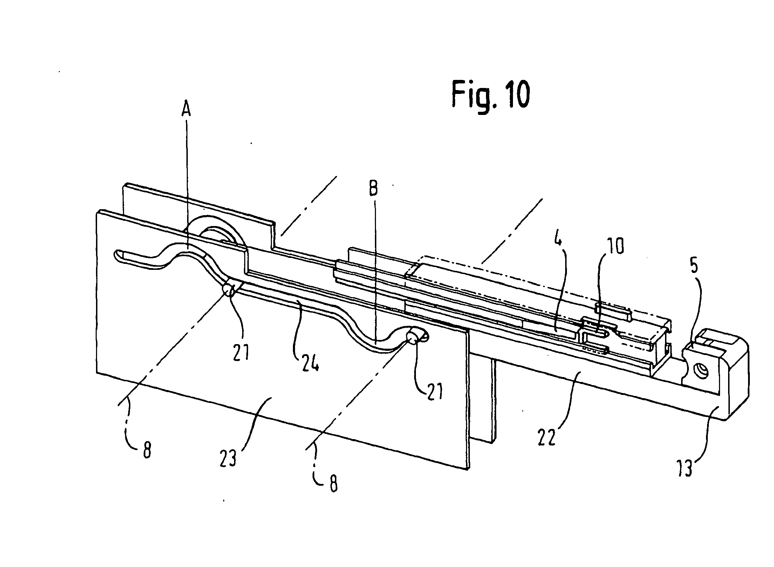

Bei den Ausführungsbeispielen der Fig. 8 bis 10 sind die Schließwerkzeuge 5, welche vorzugsweise als Matrizen ausgebildet sind, an um die Drehachsen 8 schwenkbaren Werkzeugbacken 13 befestigt. Die jeweiligen Drehachsen 8 erstrecken sich parallel zum Zopfabschnitt 1. Die in diesen Ausführungsformen dargestellten Clipwerkzeuge 6 bilden ebenfalls, wie beim Ausführungsbeispiel der Fig. 1, eine gemeinsame Führungseinrichtung für die Schließwerkzeuge 4 und 5 beim Vorbeibewegen der Schließwerkzeuge 5 am Zopfabschnitt 1, so dass diese in eine der Fig. 2 entsprechende Position gebracht werden. Beim Ausführungsbeispiel der Fig. 8 befinden sich bei dieser Vorbeibewegung die beiden Werkzeugbacken 13 in der dargestellten geöffneten Stellung. Beim Ausführungsbeispiel der Fig. 9 befindet sich der Werkzeugbacken 13 in der in der Figur dargestellten nach unten geschwenkten Position. Beim Ausführungsbeispiel der Fig. 10 befindet sich der Werkzeugbacken ebenfalls bei dieser Vorbeibewegung am Zopfabschnitt 1 in einer nach unten geschwenkten Bewegung, wie sie in Fig. 9 dargestellt ist. Diese wird dadurch erreicht, dass Führungszapfen 21, welche an einem starr mit dem Werkzeugbacken 13 verbundenen Führungsarm 22 vorgesehen sind, jeweils in den mittleren Positionen bei A und B der geschwungenen Teile eines in einem Führungsblech 23 vorgesehenen Führungsschlitzes 24 sich befinden. Beim dargestellten Ausführungsbeispiel sind beidseits des Führungsarmes 22 entsprechende Führungsbleche 23 vorgesehen. Durch kombinierte Bewegung, welche die Führungszapfen 21 in dem Führungsschlitz 24, insbesondere in den beiden gebogenen Schlitzbereichen ausführen, wird die Schwenkbewegung definiert. Aus der in Fig. 2 entsprechenden Position werden anschließend die Werkzeugbacken 13 mit den daran befestigten Schließwerkzeugen 5 um die jeweiligen Drehachsen 8 geschwenkt, so dass sie mit den Schließwerkzeugen 4 ausgerichtet sind. Diese Position entspricht der in den Fig. 3 und 4 dargestellten Position des ersten Ausführungsbeispiels. Wie beim Ausführungsbeispiel der Fig. 8 gezeigt ist, sind für diese Schwenkbewegung ein Antrieb und ein zwischen die Werkzeugbacken 13 angeordnetes Getriebe vorgesehen, welches die Antriebsbewegung in entsprechende Schwenkbewegungen umsetzt. Anschließend werden die Schließwerkzeuge 4, vor denen die Clips angeordnet sind, auf die Schließwerkzeuge 5 zubewegt, um die beiden Clips, wie anhand der Fig. 4 beim ersten Ausführungsbeispiel erläutert, um den Zopfabschnitt 1 zu schließen. Anschließend wird das jeweilige Clipwerkzeug 6 in die Ausgangsposition zurückbewegt.

In vorteilhafter Weise kann der zum Schließen der Clips erforderliche vordere Teil des Clipwerkzeugs durch eine Trennwand hindurchragen. Hieraus ergibt sich eine vereinfachte Reinigung des im Arbeitsbereich, insbesondere Nassbereich befindlichen Teils des Clipwerkzeugs 6. Die übrigen zugeordneten Teile, welche zur Bewegungssteuerung des Clipwerkzeugs dienen, sowie die Clipladestation und andere Bewegungssteuereinrichtungen befinden sich hinter der Trennwand.

Um eine Mitbewegung des Clipwerkzeugs 6 mit dem Produktstrom zu ermöglichen, kann in der Trennwand ein Schlitz vorgesehen sein, welcher parallel zur Bewegungsrichtung des Produktstromes verläuft, in welchem das Clipwerkzeug synchron mit dem Produktstrom mitbewegt werden kann. Diese Bewegung erfolgt etwa in Richtung der Längsausdehnung des Zopfabschnittes 1.

### Bezugszeichenliste

- 1: füllgutfreier Zopfabschnitt
- 2,3: Füllgutabschnitte
- 4,5: Schließwerkzeuge (Stempel, Matrize)
- 6: Clipwerkzeug (gemeinsame Führungseinrichtung)
- 7: Drehachse senkrecht zum Zopfabschnitt
- 8: Drehachse parallel zum Zopfabschnitt
- 9: Cliphubeinrichtung
- 10: Clip
- 11: Clipzuführeinrichtung
- 12: Fixiereinrichtung
- 13: Werkzeugbacken
- 14: drehbarer Führungsteil
- 15: Schlitze
- 16: Verbindungsstege
- 17: Trennmesser
- 18: Hubelement
- 19: Antriebseinrichtung
- 20: Kurbeltrieb
- 21: Führungszapfen
- 22: Führungsarm
- 23: Führungsblech
- 24: Führungsschlitz
- 25: Clipladeeinrichtung

## Patentansprüche

1. Verfahren zum gesteuerten Verschließen wenigstens eines Clips um einen füllgutfreien Zopfabschnitt einer Hülle zwischen zwei mit der Hülle umschlossenen Füllgutabschnitten, bei dem der wenigstens eine Clip den Zopfabschnitt umfassend mittels zweier gesteuert bewegter Schließwerkzeuge um den Zopfabschnitt geschlossen wird, **dadurch gekennzeichnet, dass** das eine Schließwerkzeug von einer Seite des Zopfabschnittes quer zur Längausdehnung des Zopfabschnittes am Zopfabschnitt vorbei auf die andere Seite des Zopfabschnittes geführt wird und anschließend die beiden Schließwerkzeuge in eine zueinander ausgerichtete Position für das anschließende Schließen des Clips um den Zopfabschnitt gebracht werden.

2. Verfahren nach Anspruch 1, **dadurch gekennzeichnet, dass** das am Zopfabschnitt vorbeibewegte Schließwerkzeug gegenüber dem anderen ortsfest gehaltenen Schließwerkzeug in die zueinander ausgerichtete Position bewegt wird.

3. Verfahren nach Anspruch 1 oder 2, **dadurch gekennzeichnet, dass** das am Zopfabschnitt vorbeibewegte Schließwerkzeug durch eine Drehbewegung in die zueinander ausgerichtete Position gebracht wird.

4. Verfahren nach einem der Ansprüche 1 bis 3, **dadurch gekennzeichnet, dass** der Clip in einer zur Richtung der Schließbewegung senkrechten Laderichtung zwischen die beiden Schließwerkzeuge bewegt wird.

5. Verfahren nach einem der Ansprüche 1 bis 4, **dadurch gekennzeichnet, dass** der Clip vor dem beim Schließvorgang bewegte Schließwerkzeug angeordnet wird.

6. Verfahren nach einem der Ansprüche 1 bis 5, **dadurch gekennzeichnet, dass** mehrere Clips vor der Ladebewegung, bei welcher jeweils ein Clip zwischen die beiden Schließwerkzeuge bewegt wird, etwa senkrecht zur Richtung der Ladebewegung geführt werden.

7. Vorrichtung zum gesteuerten Verschließen wenigstens eines Clips um einen füllgutfreien Zopfabschnitt (1) einer Hülle zwischen zwei mit der Hülle umschlossenen Füllgutabschnitten (2, 3) mit zwei gesteuert zu bewegenden Schließwerkzeugen (4, 5), welche beim Schließvorgang zu beiden Seiten des Zopfabschnittes (1) anzuordnen sind,
**dadurch gekennzeichnet, dass** die beiden Schließwerkzeuge (4, 5) eine gemeinsame Führungseinrichtung aufweisen, mit welcher die Schließwerkzeuge (4, 5) quer zur Längsausdehnung des Zopfabschnittes (1) bewegbar geführt sind, wobei zur Anordnung der Schließwerkzeuge (4, 5) zu beiden Seiten des Zopfabschnittes (1) eines der beiden Schließwerkzeuge (4, 5) am Zopfabschnitt vorbeiführbar und in eine für den Schließvorgang mit dem anderen Schließwerkzeug ausgerichtete Position relativ zu dem anderen Schließwerkzeug bewegbar ist.

8. Vorrichtung nach Anspruch 7, **dadurch gekennzeichnet, dass** bei der Schließbewegung das am Zopfabschnitt (1) vorbeibewegte Schließwerkzeug (5) ortsfest in der Führungseinrichtung gehalten ist und das andere Schließwerkzeug (4) in der Führungseinrichtung bewegt ist.

9. Vorrichtung nach Anspruch 7 oder 8, **dadurch gekennzeichnet, dass** eine Clipladeeinrichtung (25) vorgesehen ist, welche den jeweiligen Clip (10) in die für den Schließvorgang vorgesehene Bereitstellung bringt.

10. Vorrichtung nach einem der Ansprüche 7 bis 9, **dadurch gekennzeichnet, dass** die Führungseinrichtung eine parallel zur Schließbewegung geführte Fixiereinrichtung (12) aufweist, mit welcher der Zopfabschnitt (1) gegenüber der Führungseinrichtung fixierbar ist.

## Claims

1. A method for controlled closure of at least one clip about an unstuffed twisted end portion of a casing between two stuffed portions enclosed by the casing, in which the at least one clip is closed around the twisted end portion by means of two closing tools moved in a controlled manner such that the clip encircles the twisted end portion, **characterised in that** the one closing tool is guided from one side of the twisted end portion transversely to the longitudinal extension of the twisted end portion and past the twisted end portion to the other side of the twisted end portion, and the two closing tools are subsequently brought into a position aligned with each other for subsequent closure of the clip about the twisted end portion.

2. The method according to claim 1, **characterised in that** the closing tool moved past the twisted end portion is moved into the aligned position opposite the other closing tool which is held in a fixed stationary position.

3. The method according to claim 1 or 2, **characterised in that** the closing tool moved past the twisted end portion is brought into the aligned position by a rotational movement.

4. The method according to any one of claims 1 to 3, **characterised in that** the clip is moved between the two closing tools in a loading direction perpendicular to the closing movement.

5. The method according to any one of claims 1 to 4, **characterised in that** the clip is arranged ahead of the closing tool which is moved during the closing operation.

6. The method according to any one of claims 1 to 5, **characterised in that** a plurality of clips are guided approximately perpendicularly to the direction of the loading movement prior to the loading movement, in which one clip is moved between the two closing tools.

7. A device for controlled closure of at least one clip about an unstuffed twisted end portion (1) of a casing between two stuffed portions (2, 3) enclosed by the casing, comprising two closing tools (4, 5) which can be moved in a controlled manner and which are to be arranged during the closing operation on either side of the twisted end portion (1),
**characterised in that** the two closing tools (4, 5) have a shared guide mechanism with which the closing tools (4, 5) are movably guided transversely to the longitudinal extension of the twisted end portion (1), wherein, in order to arrange the closing tools (4, 5) on either side of the twisted end portion (1), one of the two closing tools (4, 5) can be moved past the twisted end portion and can be moved into a position relative to the other closing tool which is aligned with the other closing tool for the closing operation.

8. The device according to claim 7, **characterised in that**, during the closing movement, the closing tool (5) which is moved past the twisted end portion (1) is held in a fixed stationary position in the guide mechanism and the other closing tool (4) is moved in the guide mechanism.

9. The device according to claim 7 or 8, **characterised in that** a clip loading device (25) is provided which brings the respective clip (10) into the designated position for the closing operation.

10. The device according to any one of claims 7 to 9, **characterised in that** the guide mechanism has a fixing device (12) which is guided parallel to the closing movement and with which the twisted end portion (1) can be fixed in position relative to the guide mechanism.

## Revendications

1. Procédé de fermeture commandée d'au moins un clip autour d'une section tressée d'une enveloppe, qui est exempte de produit de remplissage, entre deux sections à produit de remplissage entourées de ladite enveloppe, dans lequel ledit au moins un clip embrassant ladite section tressée est fermé autour de la section tressée au moyen de deux outils de fermeture à mouvement commandé, **caractérisé par le fait que** l'un des outils de fermeture est mené d'un côté de ladite section tressée, transversalement à l'extension longitudinale de la section tressée, vers l'autre côté de la section tressée en passant devant la section tressée et que, ensuite, les deux outils de fermeture sont amenés dans une position alignée l'un avec l'autre pour la fermeture subséquente du clip autour de ladite section tressée.

2. Procédé selon la revendication 1, **caractérisé par le fait que** l'outil de fermeture que l'on fait passer devant la section tressée est déplacé par rapport à l'autre outil de fermeture maintenu de façon stationnaire, dans la position alignée l'un avec l'autre.

3. Procédé selon la revendication 1 ou 2, **caractérisé par le fait que** l'outil de fermeture que l'on fait passer devant la section tressée est amené par un mouvement de rotation dans la position alignée l'un avec l'autre.

4. Procédé selon l'une quelconque des revendications 1 à 3, **caractérisé par le fait que** le clip est déplacé entre les deux outils de fermeture dans une direction de chargement perpendiculaire à la direction du mouvement de fermeture.

5. Procédé selon l'une quelconque des revendications 1 à 4, **caractérisé par le fait que** ledit clip est disposé devant l'outil de fermeture qui est déplacé lors de l'opération de fermeture.

6. Procédé selon l'une quelconque des revendications 1 à 5, **caractérisé par le fait que**, avant le mouvement de chargement dans lequel respectivement un clip est déplacé entre les deux outils de fermeture, plusieurs clips sont menés à peu près perpendiculairement à la direction du mouvement de chargement.

7. Dispositif de fermeture commandée d'au moins un clip autour d'une section tressée (1) d'une enveloppe, qui est exempte de produit de remplissage, entre deux sections à produit de remplissage (2, 3) entourées de ladite enveloppe, comprenant deux outils de fermeture (4, 5) à déplacer de manière commandée qui, lors de l'opération de fermeture, sont à disposer de part et d'autre de la section tressée (1), **caractérisé par le fait que** les deux outils de fermeture (4, 5) présentent un dispositif commun de guidage au moyen duquel lesdits outils de fermeture (4, 5) sont guidés de manière à être déplaçables transversalement à l'extension longitudinale de la section tressée (1), dans lequel, pour disposer les outils de fermeture (4, 5) de part et d'autre de ladite section tressée (1), on peut faire passer l'un des deux outils de fermeture (4, 5) devant la section tressée et la déplacer par rapport à l'autre outil de fermeture dans une position où il est aligné avec l'autre outil de fermeture pour l'opération de fermeture.

8. Dispositif selon la revendication 7, **caractérisé par le fait que**, lors du mouvement de fermeture, ledit outil de fermeture (5) que l'on fait passer devant la section tressée (1) est maintenu de façon stationnaire dans ledit dispositif de guidage et l'autre outil de fermeture (4) est déplacé dans le dispositif de guidage.

9. Dispositif selon la revendication 7 ou 8, **caractérisé par le fait qu'**un dispositif de chargement de clips (25) est prévu qui amène le clip (10) respectif dans la position prête prévue pour l'opération de fermeture.

10. Dispositif selon l'une quelconque des revendications 7 à 9, **caractérisé par le fait que** ledit dispositif de guidage comprend un dispositif de fixation (12) qui est guidé parallèlement au mouvement de fermeture et par lequel ladite section tressée (1) peut être fixée par rapport au dispositif de guidage.
